# EUROPÄISCHE PATENTANMELDUNG

(11) **EP 2 634 155 A1**
(43) Veröffentlichungstag der Anmeldung: **04.09.2013**
(21) Anmeldenummer: 12450013.3
(22) Anmeldetag: 02.03.2012
(51) Int. Cl.: C04B 32/00

(54) **Verfahren zum Herstellen eines porösen Steinerzeugnisses aus kristallinem Naturstein**

(71) Anmelder: Poschacher Natursteinwerke GmbH & Co. KG, 4222 St. Georgen/Gusen (AT)
(72) Erfinder: Sümecz, Franz, 2294 Marchegg (AT); Steiner, Gerhard, 4073 Wilhering (AT)
(74) Vertreter: Keschmann, Marc

(57) **Zusammenfassung**

Bei einem Verfahren zum Herstellen eines porösen Steinerzeugnisses aus kristallinem Naturstein, wird der kristalline Naturstein in pulverförmiger Form einer Temperaturbehandlung unterworfen, wobei die Temperaturbehandlung das kontrollierte Erwärmen des Steins auf eine das Austreten eines Gases aus dem Stein bewirkende Temperatur umfasst, sodass eine geschäumte Struktur entsteht, welche erstarren gelassen wird.

## Beschreibung

Als Naturstein bezeichnet man ganz allgemein alle Gesteine wie man sie in der Natur vorfindet. Natursteine werden in Steinbrüchen abgebaut und anschließend in steinverarbeitenden Betrieben zerkleinert und hinsichtlich der Oberflächen bearbeitet. Natursteine lassen sich entsprechend ihrer Entstehung in drei Gesteinsklassen unterteilen. Man unterscheidet zwischen Erstarrungsgestein (Magmatite), Ablagerungsgestein (Sedimentite) und Umwandlungsgestein (Metamorphite). Magmatisches Gestein entsteht durch Erstarrung bzw. Kristallisation von Magma aus dem Erdinneren. Die Erfindung bezieht sich auf jede Art von kristallinem Gestein.

Naturstein wird in den verschiedensten Bereichen eingesetzt und zwar insbesondere in der Industrie, in der Architektur und im Innenausbau. Dabei nützt man die hohe Festigkeit des Natursteins. Als Nachteil ist die hohe Dichte und damit die hohe Masse zu nennen.

Um die hohe Masse von Werkstoffen zu reduzieren, ist in verschiedenen Industriebereichen bekannt geworden, die betreffenden Werkstoffe zu porösen Erzeugnissen zu verarbeiten. Dies ist beispielsweise in der Kunststein-, aber auch in der Metallindustrie bereits verbreitet. Aluminiumschaum wird beispielsweise dadurch hergestellt, dass Aluminiumpulver mit einem Treibmittel abgemischt und kompaktiert wird. Dieses schaumfähige Vormaterial wird in Kokillen eingelegt und auf Schmelztemperatur erwärmt, bis das Treibmittel aufschäumt. Unmittelbar nach dem Einsetzen des Schäumprozesses wird die Form gekühlt und somit der Aluminiumschaum in der Form eingefroren. Durch diesen Prozess entsteht ein geschlossenporiger Aluminiumschaum, welcher an der Oberfläche mit einer dünnen Gusshaut überzogen ist.

Die vorliegende Erfindung zielt darauf ab, ein poröses Steinerzeugnis aus einem kristallinen Naturstein herzustellen. Dies wird erfindungsgemäß dadurch erreicht, dass der kristalline Naturstein in pulverförmiger Form einer Temperaturbehandlung unterworfen wird, wobei die Temperaturbehandlung das kontrollierte Erwärmen des Steins auf eine das Austreten eines Gases aus dem Stein bewirkende Temperatur umfasst, sodass eine geschäumte Struktur entsteht, welche erstarren gelassen wird. Es wurde überraschend festgestellt, dass bestimmte Natursteine bei Erwärmung auf einen bestimmten Temperaturbereich ausgasen, sodass ohne weitere Einwirkung eine geschäumte Struktur entsteht, die nach der beim Abkühlen eintretenden Erstarrung einen porösen bzw. geschäumten Stein ergibt und so wie das Ausgangsprodukt eine überaus hohe Festigkeit, allerdings eine überaus geringe Dichte aufweist. Die erfindungsgemäße Herstellung des porösen Steinerzeugnisses kommt somit ohne gesondertes Treibmittel und bevorzugt ohne Zusatzmittel aus, sodass die Herstellung überaus einfach und kostengünstig erfolgen kann. Der für das Ausgasen verantwortliche Mechanismus konnte noch nicht vollständig erklärt werden. Es wird jedoch gegenwärtig vermutet, dass das Gasvolumen von den in der Glimmerfraktion vorhandenen OH-Gruppen, die sich bei Überschreiten einer bestimmten Temperatur verflüchtigen, herrührt.

Wesentlich ist, dass der kristalline Naturstein in pulverförmiger Form eingesetzt wird, um die für die Temperaturbehandlung erforderliche Oberfläche bereitstellen zu können. Das Pulver kann bevorzugt auch in aufgeschlämmter Form eingesetzt werden. Alternativ ist es auch möglich, den pulverförmigen, kristallinen Naturstein in verpresster Form einzusetzen. Um die für die Temperaturbehandlung erforderliche Oberfläche bereitstellen zu können, ist es vorteilhaft, wenn eine bestimmte Korngröße nicht überschritten wird. Die Erfindung sieht daher bevorzugt vor, dass der kristalline Naturstein in einer Korngröße von < 0,5 mm, bevorzugt < 0,1 mm, bevorzugt < 50 µm, insbesondere < 30 µm eingesetzt wird.

Um das Ausgasen des Steins zu bewirken, ist eine kontrollierte Erwärmung des Steins erforderlich. Je nach dem, ob die Temperaturbehandlung bei Umgebungsdruck oder unter Einwirkung eines Überdruckes auf das Steinpulver erfolgt, ergeben sich unterschiedliche Mindesttemperaturen. Das erfindungsgemäße Verfahren wird in diesem Zusammenhang bevorzugt derart vorgenommen, dass die Temperaturbehandlung das Erwärmen des Steins auf eine Temperatur von mindestens 500°C, bevorzugt mindestens 800°C, bevorzugt auf 1000°C - 1100°C, umfasst. Die genannte Temperatur hängt auch von der Zusammensetzung des Natursteins ab. So kann es unter Umständen auch erforderlich sein, dass die Temperaturbehandlung das Erwärmen des Steins auf eine Temperatur von mindestens 1400°C, bevorzugt mindestens 1600°C, bevorzugt mindestens 1800°C umfasst. Bevorzugt erfolgt das Erwärmen des Steins unter Anwendung eines vorgegebenen Temperaturprofils. Das Temperaturprofil bestimmt hierbei den zeitlichen Verlauf der Temperatur während der Temperaturbehandlung, wobei insbesondere die Aufwärmgeschwindigkeit von Bedeutung ist. Bevorzugt wird hierbei derart vorgegangen, dass das Erwärmen des Steins mit einer Rate von höchstens 10°C pro Minute, bevorzugt höchstens 7°C pro Minute, bevorzugt höchstens 5°C pro Minute erfolgt. Die Temperaturerhöhung erfolgt bevorzugt linear, wobei es aber auch denkbar ist, zwischen linear ansteigenden Abschnitten des Temperaturprofils Abschnitte mit konstanter Temperatur vorzusehen. Das Erwärmen des Steins erfolgt bevorzugt in einem geschlossenen Ofen, wobei die Ofenatmosphäre entsprechend den jeweiligen Erfordernissen gewählt werden kann. Die Ofenatmosphäre kann Luft sein. Alternativ wird das Verfahren so geführt, dass das Erwärmen des Steins in einer Sauerstoff-, Stickstoff und/oder Argon enthaltenden oder einer daraus bestehenden Atmosphäre vorgenommen wird.

In einem Ofen kann auch in einfacher Weise der während der Erwärmung herrschende Druck kontrolliert werden. Das Erwärmen kann hier in herkömmlicher Weise bei Atmosphärendruck vorgenommen werden. Alternativ kann auch so vorgegangen werden, dass das Erwärmen bei unteratmosphärischem Druck, insbesondere bei einem Druck (absolut) von < 0,8 bar, bevorzugt < 0,5 bar, bevorzugt < 0,2 bar, bevorzugt im Vakuum vorgenommen wird. Bei einem unteratmosphärischen Druck wird das Ausgasen des Steins begünstigt.

Das Erstarrenlassen des geschäumten Steins erfolgt mit Vorteil an Umgebungsluft.

In Versuchen hat sich gezeigt, dass das erfindungsgemäße Verfahren insbesondere bei kristallinen Natursteinen vorteilhaft eingesetzt werden kann, deren Hauptbestandteile Feldspat, Quarz und Glimmer sind. Besonders bevorzugt wird als kristalliner Naturstein ein Tiefengestein, insbesondere Granit verwendet.

Das mit Hilfe des erfindungsgemäßen Verfahrens erhaltene poröse Steinerzeugnis kann aufgrund seiner vorteilhaften Eigenschaften in den verschiedensten Bereichen eingesetzt werden. Beispielsweise ist die Verwendung in der Architektur oder im Innenausbau denkbar. Weiters ist eine Reihe von industriellen Anwendungen denkbar. Die Materialeigenschaften des porösen Steinerzeugnisses können noch dadurch verändert, angepasst bzw. verbessert werden, dass dem pulverförmigen kristallinen Naturstein bevorzugt ein Pulver eines anderen Materials, z.B. ein Metallpulver zugemischt wird. Es entsteht hierbei ein Steinmetallverbund, der bevorzugt derart ausgebildet sein kann, dass er elektrisch leitet und/oder magnetisierbar ist, sodass sich eine Vielzahl weiterer Anwendungsmöglichkeiten ergibt.

Das erfindungsgemäße poröse Steinerzeugnis kann entweder eine offen- oder geschlossenporige Struktur aufweisen, wobei bevorzugt Porengrößen von mindestens 0,5 mm, bevorzugt mindestens 0,8 mm, insbesondere mindestens 1 mm vorgesehen sind.

Die Erfindung wird nachfolgend anhand eines Ausführungsbeispiels näher erläutert.

Es wurde ein Granitstein zu einem Pulver mit einer mittleren Korngröße von ca. 30 µm zermahlen. Das Granitpulver wurde in einen Keramikbehälter gegeben und in der Folge in einem Ofen bei einem Absolutdruck von 400 mbar und unter Schutzgas (das aber nicht zwingend erforderlich ist) langsam auf 1500°C aufgewärmt. Die Erwärmung erfolgte dabei derart, dass die Temperatur des Steinpulvers um 5°C pro Minute zugenommen hat. Ab einer Temperatur von 1200°C wurde beobachtet, dass der Stein ausgast. Aufgrund der Ausgasung wird das bei dieser Temperatur bereits geschmolzene Steinpulver aufgeschäumt. Danach wurde die geschäumte Struktur aus dem Ofen genommen und bei Umgebungsluft abgekühlt, wobei die Struktur erstarrt ist und ein poröses Steinerzeugnis erhalten wurde.

Granitpulver fällt in großen Mengen als Abfallprodukt in der steinverarbeitenden Industrie an, sodass für das erfindungsgemäße Verfahren ein überaus kostengünstiges Ausgangsmaterial zur Verfügung steht.

## Patentansprüche

1. Verfahren zum Herstellen eines porösen Steinerzeugnisses aus kristallinem Naturstein, bei welchem der kristalline Naturstein in pulverförmiger Form einer Temperaturbehandlung unterworfen wird, wobei die Temperaturbehandlung das kontrollierte Erwärmen des Steins auf eine das Austreten eines Gases aus dem Stein bewirkende Temperatur umfasst, sodass eine geschäumte Struktur entsteht, welche erstarren gelassen wird.

2. Verfahren nach Anspruch 1, **dadurch gekennzeichnet, dass** der pulverförmige kristalline Naturstein in aufgeschlämmter Form eingesetzt wird.

3. Verfahren nach Anspruch 1 oder 2, **dadurch gekennzeichnet, dass** der pulverförmige kristalline Naturstein in verpresster Form eingesetzt wird.

4. Verfahren nach Anspruch 1, 2 oder 3, **dadurch gekennzeichnet, dass** der kristalline Naturstein in einer Korngröße von < 0,5 mm, bevorzugt < 0,1 mm, bevorzugt < 50 µm, insbesondere < 30 µm eingesetzt wird.

5. Verfahren nach einem der Ansprüche 1 bis 4, **dadurch gekennzeichnet, dass** die Temperaturbehandlung das Erwärmen des Steins auf eine Temperatur von mindestens 500°C, bevorzugt mindestens 800°C, bevorzugt mindestens 1000°C, insbesondere mindestens 1200°C umfasst.

6. Verfahren nach einem der Ansprüche 1 bis 5, **dadurch gekennzeichnet, dass** das Erwärmen des Steins mit einer Rate von höchstens 10°C pro Minute, bevorzugt höchstens 7°C pro Minute, bevorzugt höchstens 5°C pro Minute erfolgt.

7. Verfahren nach einem der Ansprüche 1 bis 6, **dadurch gekennzeichnet, dass** als kristalliner Naturstein ein Stein mit Feldspat, Quarz und Glimmer als Hauptbestandteile eingesetzt wird.

8. Verfahren nach einem der Ansprüche 1 bis 7, **dadurch gekennzeichnet, dass** als kristalliner Naturstein ein Tiefengestein, insbesondere Granit eingesetzt wird.

9. Verfahren nach einem der Ansprüche 1 bis 8, **dadurch gekennzeichnet, dass** dem pulverförmigen kristallinen Naturstein ein Pulver eines anderen Materials, z.B. ein Metallpulver zugemischt wird.

10. Verfahren nach einem der Ansprüche 1 bis 9, **dadurch gekennzeichnet, dass** das Erwärmen des Steins in einer Sauerstoff, Stickstoff und/oder Argon enthaltenden oder einer daraus bestehenden Atmosphäre vorgenommen wird.

11. Verfahren nach einem der Ansprüche 1 bis 10, **dadurch gekennzeichnet, dass** das Erwärmen bei unteratmosphärischem Druck, insbesondere bei einem Druck von < 0,8 bar, bevorzugt < 0,5 bar, bevorzugt < 0,2 bar, bevorzugt im Vakuum vorgenommen wird.

12. Verfahren nach einem der Ansprüche 1 bis 11, **dadurch gekennzeichnet, dass** das Erstarrenlassen des geschäumten Steins an Umgebungsluft erfolgt.

13. Geschäumter Naturstein, erhältlich durch ein Verfahren nach einem der Ansprüche 1 bis 12.

14. Poröses Steinerzeugnis, das aus Naturstein besteht und das eine offen- oder geschlossenporige Struktur mit einer Porengröße von mindestens 0,5 mm, bevorzugt mindestens 0,8 mm, insbesondere mindestens 1 mm aufweist.

15. Poröses Steinerzeugnis nach Anspruch 14, **dadurch gekennzeichnet, dass** der Naturstein ein Tiefengestein ist.

16. Poröses Steinerzeugnis nach Anspruch 14 oder 15, **dadurch gekennzeichnet, dass** der Naturstein Granit ist.
